# EUROPÄISCHE PATENTSCHRIFT

(11) **EP 2 072 341 B1**
(45) Veröffentlichungstag und Bekanntmachung des Hinweises auf die Patenterteilung: **23.05.2012**
(21) Anmeldenummer: 08169113.1
(22) Anmeldetag: 14.11.2008
(51) Int. Cl.: B60R 13/04

(54) **Antriebseinheit in einem Kraftfahrzeug**
Drive unit in a vehicle
Dispositif d'entraînement dans un véhicule

(30) Priorität: 13.12.2007 DE 102007060141
(43) Veröffentlichungstag der Anmeldung: 24.06.2009
(73) Patentinhaber: Ford-Werke GmbH, 50735 Köln (DE)
(72) Erfinder: Benderoth, Thomas, 51647, Gummersbach (DE); Lichter, Martin, 50374, Erftstadt (DE); Lopes dos Santos, Armando, 50737, Köln (DE)
(74) Vertreter: Dörfler, Thomas

(56) Entgegenhaltungen:
- DE-A1- 2 316 013
- DE-A1- 10 215 903
- US-A- 3 280 510
- US-A- 4 221 411

## Beschreibung

Die vorliegende Erfindung betrifft eine Antriebseinheit in einem Kraftfahrzeug gemäß dem Oberbegriff des Anspruchs 1.

Derartige Antriebseinheiten finden unter anderem Einsatz- zum Antrieb von Türkantenschutzeinrichtungen, bei denen ein Kantenschutzkörper die Türkante abdeckt, um Beschädigungen der Tür durch Stoß gegen benachbarte Fahrzeuge oder andere Hindernisse wie Bäume, Mauern, etc. bei deren Öffnen zu vermeiden. Ein derartige Kantenschutzkörper sind beispielsweise in den US 4,221,411, DE 9405958 U 1, DE 19934404 A1, DE 10215903 A1, 102004031798 A1 und W02005/021305 offenbart. Diesen Kantenschutzkörpern ist gemeinsam, dass sie innerhalb des Türkörpers in der Nähe der öffnenden Türkante angeordnet sind, wo sie verbleiben bis die Tür bis zu einem ersten Öffnungswinkel von etwa 10° geöffnet ist. Beim weiteren Öffnen der Tür schwenkt der Kantenschutzkörper heraus und um die Türkante zu umfassen. Bei einem zweiten Öffnungswinkel von etwa 25° sollte die Schwenkbewegung abgeschlossen sein, so dass die Türkante beim weiteren Öffnen geschützt ist. Die genannten Druckschriften beschreiben unterschiedliche Lösungen für derartige vom Türöffnungswinkel abhängige Antriebe für Kantenschutzkörper, die teils umständlich, teils aufwendig sind und darüber hinaus einen erheblichen Platzbedarf innerhalb der Kfz-Tür haben.

Die aus der DE 10215903 A1 bekannte Antriebseinheit für den Kantenschutzkörper einer Fahrzeugtür wird vom Türöffnungswinkel der Tür gesteuert, indem ein Zugseil über einen Umlenkhebel von einem beweglich gelagerten Arm betätigt wird. Der Arm steht bei offener Tür aus der Türkontur heraus. Wenn die Tür geschlossen wird, kommt der Arm mit dem Türrahmen in Kontakt und wird in die Tür gedrückt. Diese Bewegung wird über den Umlenkhebel auf das Zugseil übertragen, welches dann den Kantenschutz betätigt. Bedingt durch die feste Kopplung zwischen Arm und Zugseil ist es schwierig, den Kantenschutz sowohl zu einem möglichst frühen Zeitpunkt beim Öffnen auszufahren als auch beim Schließen der Tür möglichst zu einem frühen Zeitpunkt einzufahren.

Aufgabe der vorliegenden Erfindung ist es, die Nachteile der bekannten Vorrichtungen zu überwinden.

Indem die Antriebseinheit eine Mitnehmereinrichtung aufweist, die zwischen Arm und Übertragungselement angeordnet ist und diese Mitnehmereinrichtung die Kopplung zwischen Arm und Übertragungselement in einem Bereich zwischen einem ersten und einem zweiten Türöffnungswinkel aufrechterhält und diese Mitnehmereinrichtung zumindest für einen anderen Bereich des Türöffnungswinkels die Bewegung von Arm und Übertragungselement entkoppelt, kann die Antriebseinheit abhängig vom Türöffnungswinkel einen Antrieb herstellen.

Dabei kann der erste Türöffnungswinkel bereit bei geschlossener Tür vorliegen. Dann sind Arm und Übertragungselement bei geschlossener Tür gekoppelt und erst bei Erreichen des zweiten Türöffnungswinkels entkoppelt die Mitnehmereinrichtung den Arm mit dem Übertragungselement.

Es kann aber auch der zweite Türöffnungswinkel der vollständig geöffneten Türstellung entsprechen. Dann sind Arm und Übertragungselement bei geschlossener Tür entkoppelt und erst bei Erreichen des ersten Türöffnungswinkels koppelt die Mitnehmereinrichtung den Arm mit dem Übertragungselement.

Insbesondere bei der Verwendung der Antriebseinheit für den Antrieb der bekannten Türkantenschutzeinrichtungen wird erreicht, daß schon bei kleinen Türöffnungswinkeln die Türkantenschutzeinrichtung in die vorgesehen Schutzstellung an der Türkante verfahren werden kann, während beim weiteren Öffnen der Tür, wenn die Türkantschutzeinrichtung nicht weiter verfahren werden soll und von daher kein Antrieb mehr notwendig ist, die Antriebseinheit durch die Entkopplung auch keinen Antrieb mehr erzeugt.

Wenn in dieser Anmeldung die Rede von einer Tür ist, so sind alle beweglichen Klappen an einem Kraftfahrzeug gemeint, d. h. neben Fahrer- und Beifahrertüren auch Motorhauben, Heckklappen, Kofferraumdeckel, Dachflügel zum Öffnen usw. Damit kann die erfinderische Antriebseinheit überall dort eingesetzt werden, wo eine Öffnungsbewegung einer Fahrzeugklappe in ein bestimmtes mechanisches Antriebssignal umgesetzt werden soll. Unter Türrahmen ist der die Fahrzeug-klappe umgebende Rahmen der Fahrzeugkarosserie, d. h. der Rahmen um die Öffnung in der Fahrzeugkarosserie, die von der Fahrzeugklappe geschlossen wird. Bei den Seitentüren ist der Arm bei den vorderen Seitentüren vorteilhaft gegen die A-Säule und bei den hinteren Seitentüren - sofern vorhanden - gegen die B-Säule geführt.

Vorteilhaft beträgt der erste Türöffnungswinkel zwischen 0° bis 15°, insbesondere 4° bis 6°, und der zweite Türöffnungswinkel zwischen 12° bis 30°, insbesondere 14° bis 16°. Damit wird schon bei kleinen Türöffnungswinkeln die Antriebsfunktion gewährleistet.

In einer Ausführung ist ein Ende des Arms gelenkig mit dem Türrahmen verbunden. Besonders geeignet für diese Ausführung ist der Türöffnungsbegrenzungsarm, der ohnehin bei Fahrzeugseitentüren vorhanden ist, und der dann neben seiner Begrenzungsfunktion auch noch die besagte Antriebsfunktion übernehmen kann.

Bei einer weiteren Ausführung liegt der Arm bei geschlossener Tür mittels einer vorgespannten Feder gegen den Türrahmen an. Bei sich öffnender Tür verfährt der Arm federbelastet aus der Tür aus. Dabei kann ab einem bestimmten Türöffnungswinkel der Arm stehen bleiben, indem er gegen eine Begrenzung fährt.

In einer Ausführung, insbesondere mit einem Arm, der mit dem Türrahmen gelenkig verbunden ist, umfaßt die Mitnehmereinrichtung eine Leitplatte, die gelenkig an der Tür befestigt ist, die einen Führungsschlitz aufweist und die mit dem Übertragungselement verbunden ist. Am Arm ist ein Führungspin angeordnet, der in den Führungsschlitz eingreift und in diesem gleiten kann, wobei der Führungsschlitz derart gestaltet ist, dass beim Öffnen der Tür bis zu einem ersten Öffnungswinkel der Führungspin ohne Verschwenken der Leitplatte im Führungsschlitz gleitet, danach die Führungsplatte unter Verschwenken mitnimmt und anschließend nach Erreichen des zweiten Türöffnungswinkels wieder ohne Verschwenken der Führungsplatte im Führungsschlitz gleitet.

Damit koppelt die Mitnehmereinrichtung den Arm und das Übertragungselement zwischen einem ersten und einem zweiten Türöffnungswinkel. Für den Bereich zwischen geschlossener Tür und erstem Türöffnungswinkel sowie den Bereich bei einem größeren als dem zweiten Türöffnungswinkel sind Arm und Übertragungselement entkoppelt. Damit ist gewährleistet, daß nur im Bereich zwischen erstem und zweitem Türöffnungswinkel ein Antrieb, für z. B. den Türkantenschutz, erfolgt.

In einer weiteren Ausführung umfaßt die Mitnehmereinrichtung einen Hebel, wobei der Hebel gelenkig in der Tür gelagert und mit dem Übertragungselement gekoppelt ist. Der Hebel und der Arm wirken zusammen, indem ein Anschlag auf dem Arm angebracht ist, der beim Erreichen eines bestimmten Türöffnungswinkels Arm und Hebel koppelt bzw. entkoppelt. Damit kann der Arm einen bestimmten Weg beim Öffnen bzw. Schließen der Tür aus- bzw. einfahren und nimmt dann erst den Hebel mit. Auch hier findet dann die Kopplung bzw. Entkopplung zwischen Arm und Übertragungselement bei bestimmten Türöffnungswinkeln statt.

In einer weiteren Ausführung weist der Hebel einen Mitnehmer auf, wobei der Anschlag zwischen Mitnehmer und Hebel um einen bestimmten Weg bewegbar ist. Dann kann der Arm einen bestimmten Weg verfahren und der Hebel wird erst dann mitgenommen, wenn der Anschlag entweder gegen den Hebel selbst oder gegen den Mitnehmer verfährt. Bei der Rückbewegung des Armes gilt dies entsprechend. Dadurch findet eine Entkopplung in beiden Richtungen für eine bestimmte Bewegung des Armes statt.

Vorteilhaft weist der Hebel einen Mitnehmer auf, der so angeordnet ist, daß bei bestimmten Hebeistellungen der Anschlag am Mitnehmer anliegt, wodurch Hebel und Arm gekoppelt sind, und daß bei bestimmten Stellungen des Hebels der Anschlag am Mitnehmer sich vorbei bewegt, wodurch Hebel und Arm entkoppelt sind. Dies wird dadurch bewerkstelligt, daß die Anschlagflächen von Hebel und Mitnehmer für den Anschlag unter einem bestimmten Öffnungswinkel zueinander angeordnet sind, und sich der Anschlage zwischen diesen beiden Anschlagflächen bewegt.

Wird der Hebel durch den Anschlag soweit verdreht, daß entweder die Anschlagfläche des Hebels oder des Mitnehmers überwiegend parallel zu Bewegungsrichtung des Armes sind, erfolgt bei der Bewegung des Armes keine weitere Bewegung des Hebels, da der Anschlag dann an der entsprechenden Anschlagflächen vorbei gleitet. Bei der Rückbewegung dagegen, stößt der Anschlag auf die gegenüberliegende Anschlagfläche und dreht damit den Hebel entgegengesetzt. Damit ist in bestimmten Winkelstellungen des Hebels bzw. der Tür eine direkte Vor-Zurück-Kopplung vorhanden, während bei der besagten parallelen Lage der Anschlagflächen keine Kopplung in Richtung dieser Anschlagfläche besteht.

Mit der Antriebseinheit wird eine Linearbewegung erzeugt, die durch jedes geeignete Übertragungselement auf eine anzutreibende Einrichtung im Fahrzeug übertragen werden soll. Das Übertragungselement kann ein Zug- und/oder Druckstab, ein Bowdenzug, ein Zugseil oder auch eine Vorrichtung zur Umwandlung von Linearbewegung in Rotationsbewegung sein.

Dabei kann der Arm einen Anschlag aufweisen, der nach Öffnen der Tür erst bei einem ersten Öffnungswinkel auf einen Hebel wirkt, der mit der Übertragungselement verbunden ist, wobei die Bewegung des Arms bzw. des Hebels durch einen zweiten Anschlag der mit einem zweiten Öffnungswinkel der Tür korreliert, begrenzt ist.

Vorzugsweise ist die von der erfindungsgemäßen Antriebseinheit angetriebene Einheit eine Türkantenschutzeinrichtung. Dabei kann die Türkantenschutzeinrichtung gemäß einer der eingangs genannten Druckschriften ausgebildet sein. Weiterhin kann die erfindungsgemäße Antriebseinrichtung nicht nur beim Antrieb von Türkantenschutzeinrichtungen Verwendung finden, sondern bei allen anderen Einrichtungen, die bei einer Öffnungsbewegung einer Fahrzeug-klappe ebenfalls bewegt werden sollen. Beispiele sind der Antrieb von Regenrinnen bzw. Wasserablaufprofilen z.B. an Dachflügeln oder Heckklappen, von Reflektoren, von Endlagendämpfern, von Positionslampen und/oder von Betätigungsgriffen. Es zeigen:
- Fig. 1: eine erfindungsgemäße Antriebseinheit in drei verschiedenen Tür- öffnungsphasen a), b) und c);
- Fig. 2: eine Ausführungsform mit federbelastetem Arm und Mitnehmer; und
- Fig. 3: eine weitere Ausführungsform mit federbelastetem Arm und Mitnehmer.

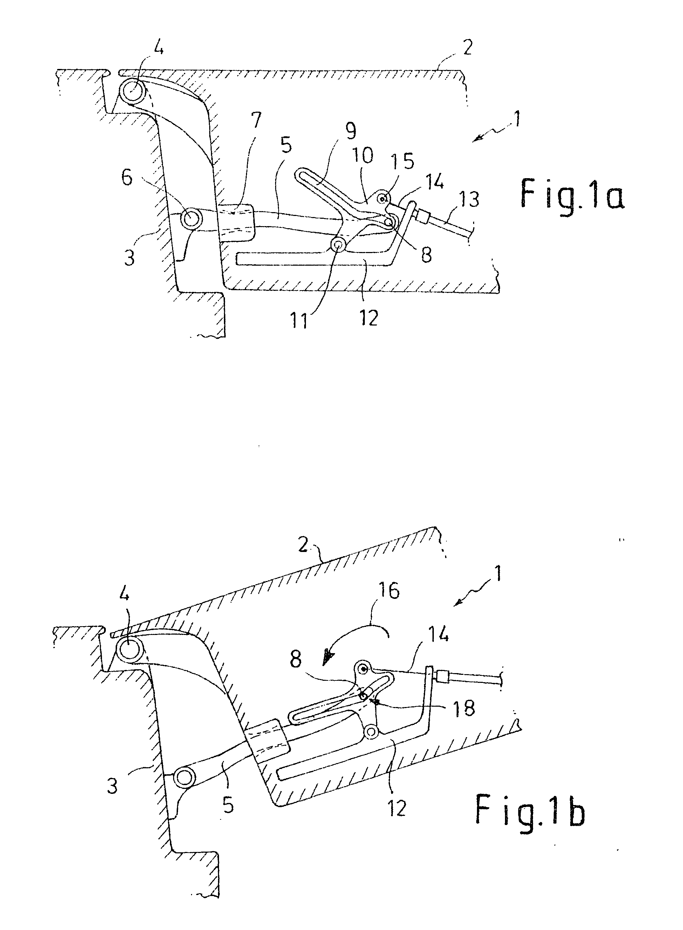

In Fig.1a ist die geschlossene Tür 1 eines Fahrzeuges mit der Türaußenblech 2 schematische dargestellt. Die Tür 1 ist über das Scharnier 4 am Türrahmen 3 des Fahrzeugs schwenkbar befestigt. Der Arm 5 ist auf einer Seite in einem gewissen Abstand zum Scharnier 4 über das Armlager 6 ebenfalls mit drehbar mit dem Türrahmen 3 verbunden und wird innerhalb der Tür 1 durch die Armführung 7 verschiebbar geführt. In der hier gezeigten Ausführung hat der Arm 5 gleichzeitig die Aufgabe als Türöffnungsbegrenzungsarm, daß heißt er bremst bzw. blockiert die Tür bei bestimmten Türöffnungswinkeln. Die andere Seite des Arms 5 weist einen Führungspin 8 auf, der in einen mit Knick 18 verlaufenden Führungsschlitz 9 der Leitplatte 10 eingreift. Die Leitplatte 10 ist am Drehlager 11 gelenkig mit dem Träger 12 verbunden, der wiederum fester innerhalb der Tür 1 angeordnet ist. Weiterhin ist am Träger 12 der Bowdenzug 13 angebracht, dessen Zugseil 14 an der Leitplatte 10 am Seillager 15 angreift.

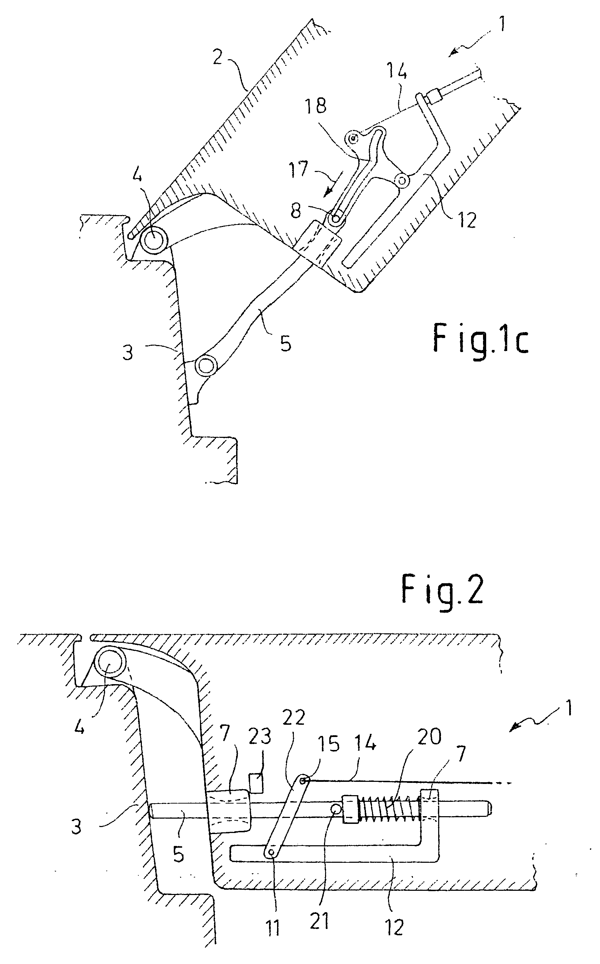

Der Führungsschlitz 9 ist so ausgebildet, dass wenn beim Öffnen der Tür 1 der Arm 5 durch die Armführung 7 aus der Tür 1 herausgezogen wird, der Führungspin 8 zunächst bis zum vorbestimmten ersten Türöffnungswinkel ohne eine Schwenkbewegung der Leitplatte 10 zu bewirken bis zum Knick 18 des Schlitzes gleitet, danach bis zu dem vorbestimmten zweiten Türöffnungswinkel die in Fig. 1 b) durch den Pfeil 16 angedeutete Schwenkbewegung der Leitplatte 10 bewirkt, wodurch das Seilzug 14 gezogen wird und nach Erreichen des zweiten Türöffnungswinkels ohne weitere Schwenkbewegung der Leitplatte 10 weiter im Führungsschlitz 9 gleitet, siehe Fig. 1c, Pfeil 17.

Bei der alternativen Ausführungsform gemäß Fig. 2 der Antriebseinheit liegt der Arm 5 bei geschlossener Tür 1 gegen den Türrahmen 3 an, indem der Arm 5 durch die Druckfeder 20 gegen den Türrahmen 3 gedrückt wird. Beim Öffnen der Tür 1 wird der Arm 5 durch die Druckfeder 20 aus der Tür heraus geschoben bis der Anschlag 21 beim ersten vorbestimmten Türöffnungswinkel den Hebel 22 erreicht und dadurch das Seil 14 bewegt bis der Hebel 22 beim zweiten vorbestimmten Türöffnungswinkel die Begrenzung 23 erreicht. Dadurch kann beim weiteren Öffnen der Tür die Druckfeder 20 den Arm 5 und damit den Hebel 22 nicht weiter bewegen, so dass auch das Seil 14 nicht mehr bewegt wird.

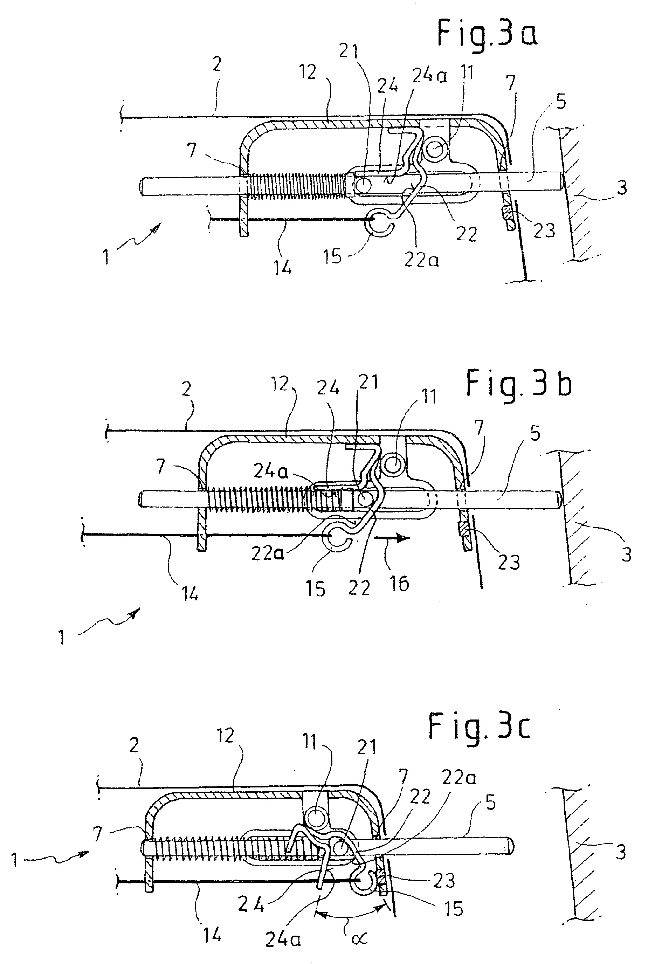

In Fig. 3 ist eine Antriebseinheit bezeigt, bei der der Hebel 22 einen Mitnehmer 24 aufweist. Die gegenüberliegenden Anschlagflächen 22a, 24a von Hebel 22 und Mitnehmer 24 für den Anschlag 21 sind unter dem Öffnungswinkel α zueinander angeordnet.

Fig. 3a zeigt die Antriebseinheit bei geschlossener Tür 1. Der Arm 5 ist gegen die Druckfeder 20 in die hinterste Stellung gedrückt. Der Anschlag 21 drückt dabei auf den Mitnehmer 24 und hat dabei den Hebel 22 in eine solche Winkelstellung verbracht, daß die Anschlagfläche 24a des Mitnehmers 24 parallel zur Bewegungsrichtung des Arms 5 liegt. Damit kann sich der Anschlag 21 ungehindert gegenüber dem Hebel 22 bewegen, d.h. es gibt keine Kopplung zwischen Arm 5 und Hebel 22. Der Anschlag 21 bewegt sich solange ungehindert, bis die in Figur 3b gezeigt Türstellung mit dem dazugehörigen Türöffnungswinkel erreicht ist. Dann trifft der Anschlag 21 auf die Anschlagsfläche 22a des Hebels 22 und nimmt diesen in Richtung des Pfeils 17 mit.

Sobald der Hebel 22 die in Fig. 3c gezeigt Stellung an der Begrenzung 23 erreicht hat, bewegt sich der Hebel 22 nicht weiter, auch wenn die Tür 1 weiter geöffnet und der Türöffnungswinkel größer wird. Der durch die Druckfeder 20 belastete Arm 5 hält den Hebel 22 in dieser Stellung gedrückt, bis die Tür 1 wieder geschlossen wird und der Arm 5 mit dem Türrahmen 3 in Kontakt kommt. Dann fährt der Arm 5 in die Tür 1 zurück und drückt den Hebel 22 über den Mitnehmer 24 ebenfalls zurück. Durch die Anordnung der Anlageflächen 22a und 24 unter dem Winkel α findet in dieser Stellung eine direkte Kopplung zwischen Arm 5 und Hebel 22 statt, d. h. die Bewegung des Arms 5 wird direkt auf den Hebel 22 und damit auf das Seil 14 übertragen.

### BEZEICHNUNGEN

- 1: Tür
- 2: Türaußenblech
- 3: Türrahmen
- 4: Scharnier
- 5: Arm
- 6: Armlager
- 7: Armführung
- 8: Führungspin
- 9: Führungsschlitz
- 10: Leitplatte
- 11: Drehlager
- 12: Träger
- 13: Bowdenzug
- 14: Seil
- 15: Seillager
- 16: Richtungspfeil
- 17: Richtungspfeil
- 18: Knick
- 20: Druckfeder
- 21: Anschlag
- 22: Hebel
- 22a: Anschlagfläche Hebel
- 23: Begrenzung
- 24: Mitnehmer
- 24a: Anschlagfläche Mitnehmer

## Patentansprüche

1. Antriebseinheit in einer Fahrzeugtür, die vom Türöffnungswinkel der Tür (1) gesteuert wird, mit einem Übertragungselement (14) und mit einem beweglich gelagerten Arm (5), wobei der Arm (5) zum einen mit einem Türrahmen (3) der Karosserie zusammenwirkt und der Arm (5) mit dem Übertragungselement (14) mechanisch gekoppelt ist,
**dadurch gekennzeichnet, daß**
zwischen Arm (5) und Übertragungselement (14) eine Mitnehmereinrichtung angeordnet ist und diese Mitnehmereinrichtung die Kopplung zwischen Arm (5) und Übertragungselement (14) in einem Bereich zwischen einem ersten und einem zweiten Türöffnungswinkel aufrechterhält und diese Mitnehmereinrichtung zumindest für einen anderen Bereich des Türöffnungswinkels die Bewegung von Arm (5) und Übertragungselement (14) entkoppelt.

2. Antriebseinheit nach Anspruch 1, **dadurch gekennzeichnet, daß** der erste Türöffnungswinkel zwischen 0° bis 15°, insbesondere 4° bis 6°, und der zweite Türöffnungswinkel zwischen 12° bis 30°, insbesondere 14° bis 16°, beträgt.

3. Antriebseinheit nach Anspruch 1 oder 2, **dadurch gekennzeichnet, daß** ein Ende des Arms (5) gelenkig mit dem Türrahmen (5) verbunden ist.

4. Antriebeinheit nach Anspruch 3, **dadurch gekennzeichnet, daß** der Arm (5) der Türöffnungsbegrenzungsarm ist.

5. Antriebseinheit nach Anspruch 1 oder 2, **dadurch gekennzeichnet, daß** der Arm (5) bei geschlossener Tür (1) mittels einer vorgespannten Feder (20) gegen den Türrahmen (3) anliegt.

6. Antriebseinheit nach einem der Ansprüche 3 oder 4, **dadurch gekennzeichnet, daß** die Mitnehmereinrichtung eine Leitplatte (10) umfaßt, die gelenkig an der Tür (1) befestigt ist, die einen Führungsschlitz (9) aufweist, in den ein am Arm (5) angeordneter Führungspin (8) eingreift, und die mit dem Übertragungselement (14) verbunden ist, wobei der Führungsschlitz (9) derart gestaltet ist, dass beim Öffnen der Tür (1) bis zu einem ersten Öffnungswinkel der Führungspin (8) ohne Verschwenken der Leitplatte (10) im Führungsschlitz (9) gleitet, danach die Leitplatte (10) unter Verschwenken mitnimmt und anschließend nach Erreichen des zweiten Türöffnungswinkels wieder ohne Verschwenken der Leitplatte (10) im Führungsschlitz (9) gleitet.

7. Antriebseinheit nach Anspruch 1 bis 5, **dadurch gekennzeichnet, daß** die Mitnehmereinrichtung einen Hebel (22) umfaßt, wobei der Hebel (22) gelenkig in der Tür (1) gelagert und mit dem Übertragungselement (14) gekoppelt ist, und wobei der Hebel (22) und der Arm (5) zusammenwirken, indem ein Anschlag (21) auf dem Arm (5) angebracht ist, der beim Erreichen eines bestimmten Türöffnungswinkels Arm (5) und Hebel (22) koppelt bzw. entkoppelt.

8. Antriebseinheit nach Anspruch 7, **dadurch gekennzeichnet, daß** der Hebel einen Mitnehmer (24) aufweist, wobei der Anschlag (21) zwischen der Anschlagfläche (24a) des Mitnehmers (24) und der Anschlagfläche (22a) des Hebels (22) um einen bestimmten Weg bewegbar ist.

9. Antriebseinheit nach Anspruch 7 oder 8, **dadurch gekennzeichnet, daß** der Hebel (22) einen Mitnehmer (24) aufweist, der so angeordnet ist, daß bei bestimmten Hebelstellungen der Anschlag (21) am Mitnehmer (24) anliegt, wodurch Hebel (22) und Arm (5) gekoppelt sind, und daß bei bestimmten Stellungen des Hebels (22) der Anschlag (21) am Mitnehmer (24) sich vorbei bewegt, wodurch Hebel (22) und Arm (5) entkoppelt sind.

10. Antriebseinheit nach Anspruch 8 oder 9, **dadurch gekennzeichnet, daß** die Anschlagflächen (22a, 24a) von Hebel (22) und Mitnehmer (24) unter einem Öffnungswinkel α zueinander angeordnet sind.

11. Antriebseinheit nach einem der vorherigen Ansprüche, **dadurch gekennzeichnet, daß** das Übertragungselement ein Zug- und/oder ein Druckstab, ein Bowdenzug oder ein Zugseil ist.

## Claims

1. Vehicle door drive unit which is controlled by the opening angle of the door (1), having a transmission element (14) and a movably mounted arm (5), wherein the arm (5) firstly interacts with a door frame (3) in the body, and the arm (5) is mechanically coupled to the transmission element (14), **characterized in that** a driver device is arranged between the arm (5) and transmission element (14), and said driver device maintains the coupling between the arm (5) and transmission element (14) in a region between a first and a second door opening angle, and said driver device decouples the movement of the arm (5) and transmission element (14) at least for another region of the door opening angle.

2. Drive unit according to Claim 1, **characterized in that** the first door opening angle is between 0° and 15°, in particular 4° and 6°, and the second door opening angle is between 12° and 30°, in particular 14° to 16°.

3. Drive unit according to Claim 1 or 2, **characterized in that** one end of the arm (5) is connected in an articulated manner to the door frame (5).

4. Drive unit according to Claim 3, **characterized in that** the arm (5) is the arm which limits the door opening.

5. Drive unit according to Claim 1 or 2, **characterized in that**, when the door (1) is closed, the arm (5) bears against the door frame (3) by means of a prestressed spring (20).

6. Drive unit according to either of Claims 3 and 4, **characterized in that** the driver device comprises a directing plate (10) which is fastened in an articulated manner to the door (1), has a guide slot (9) in which a guide pin (8) arranged on the arm (5) engages, and is connected to the transmission element (14), the guide slot (9) being configured in such a manner that, during the opening of the door (1) as far as a first opening angle, the guide pin (8) slides in the guide slot (9) without the directing plate (10) pivoting, and then carries the directing plate (10) along, with the latter pivoting, and, finally, after the second door opening angle is reached, slides in the guide slot (9) again without the directing plate (10) pivoting.

7. Drive unit according to Claims 1 to 5, **characterized in that** the driver device comprises a lever (22), the lever (22) being mounted in an articulated manner in the door (1) and being coupled to the transmission element (14), and the lever (22) and the arm (5) interacting by a stop (21) being mounted on the arm (5), said stop coupling or decoupling the arm (5) and lever (22) upon a certain door opening angle being reached.

8. Drive unit according to Claim 7, **characterized in that** the lever has a driver (24), the stop (21) being movable by a certain distance between the stop surface (24a) of the driver (24) and the stop surface (22a) of the lever (22).

9. Drive unit according to Claim 7 or 8, **characterized in that** the lever (22) has a driver (24) which is arranged in such a manner that, in certain lever positions, the stop (21) bears against the driver (24), as a result of which the lever (22) and arm (5) are coupled, and **in that**, at certain positions of the lever (22), the stop (21) moves past the driver (24), as a result of which the lever (22) and arm (5) are decoupled.

10. Drive unit according to Claim 8 or 9, **characterized in that** the stop surfaces (22a, 24a) of the lever (22) and driver (24) are arranged at an opening angle a to each other.

11. Drive unit according to one of the preceding claims, **characterized in that** the transmission element is a tension and/or compression rod, a Bowden cable or a pull cable.

## Revendications

1. Unité d'entraînement dans une porte de véhicule, qui est commandée par l'angle d'ouverture de la porte (1), comprenant un élément de transmission (14) et un bras (5) monté mobile, le bras (5) coopérant d'une part avec un cadre de porte (3) de la carrosserie et le bras (5) étant accouplé mécaniquement à l'élément de transmission (14),
**caractérisée en ce**
**qu'**entre le bras (5) et l'élément de transmission (14) est disposé un dispositif d'entraînement et ce dispositif d'entraînement maintient l'accouplement entre le bras (5) et l'élément de transmission (14) dans une plage entre un premier et un deuxième angle d'ouverture de porte, et ce dispositif d'entraînement désaccouple le mouvement du bras (5) et de l'élément de transmission (14) au moins pour une autre plage d'angle d'ouverture de porte.

2. Unité d'entraînement selon la revendication 1, **caractérisée en ce que** le premier angle d'ouverture de porte est compris entre 0° et 15°, notamment entre 4° et 6°, et le deuxième angle d'ouverture de porte est compris entre 12° et 30°, notamment entre 14° et 16°.

3. Unité d'entraînement selon la revendication 1 ou 2, **caractérisée en ce qu'**une extrémité du bras (5) est reliée de manière articulée au cadre de porte (3).

4. Unité d'entraînement selon la revendication 3, **caractérisée en ce que** le bras (5) est le bras de limitation de l'ouverture de la porte.

5. Unité d'entraînement selon la revendication 1 ou 2, **caractérisée en ce que** le bras (5) s'applique contre le cadre de porte (3) au moyen d'un ressort précontraint (20) lorsque la porte (1) est fermée.

6. Unité d'entraînement selon l'une quelconque des revendications 3 ou 4, **caractérisée en ce que** le dispositif d'entraînement comprend une plaque directrice (10) qui est fixée de manière articulée à la porte (1), qui présente une fente de guidage (9) dans laquelle s'engage une broche de guidage (8) disposée sur le bras (5), et qui est connectée à l'élément de transmission (14), la fente de guidage (9) étant configurée de telle sorte que lors de l'ouverture de la porte (1), jusqu'à un premier angle d'ouverture, la broche de guidage (8) glisse sans pivotement de la plaque directrice (10) dans la fente de guidage (9), puis entraîne la plaque directrice (10) par pivotement et ensuite, une fois atteint, le deuxième angle d'ouverture de porte, glisse à nouveau sans pivotement de la plaque directrice (10) dans la fente de guidage (9).

7. Unité d'entraînement selon les revendications 1 à 5, **caractérisée en ce que** le dispositif d'entraînement comprend un levier (22), le levier (22) étant monté de manière articulée dans la porte (1) et étant accouplé à l'élément de transmission (14), le levier (22) et le bras (5) coopérant l'un avec l'autre en appliquant une butée (21) sur le bras (5), laquelle accouple ou désaccouple le bras (5) et le levier (22) lorsqu'un angle d'ouverture de porte déterminé est atteint.

8. Unité d'entraînement selon la revendication 7, **caractérisée en ce que** le levier présente un dispositif d'entraînement (24), la butée (21) pouvant être déplacée entre la surface de butée (24a) du dispositif d'entraînement (24) et la surface de butée (22a) du levier (22) sur une course déterminée.

9. Unité d'entraînement selon la revendication 7 ou 8, **caractérisée en ce que** le levier (22) présente un dispositif d'entraînement (24) qui est disposé de telle sorte que, dans des positions déterminées du levier, la butée (21) s'applique contre le dispositif d'entraînement (24), de sorte que le levier (22) et le bras (5) soient accouplés, et que dans des positions déterminées du levier (22), la butée (21) se déplace devant le dispositif d'entraînement (24), de sorte que le levier (22) et le bras (5) soient désaccouplés.

10. Unité d'entraînement selon la revendication 8 ou 9, **caractérisée en ce que** les faces de butée (22a, 24a) du levier (22) et du dispositif d'entraînement (24) sont disposées suivant un angle d'ouverture a l'une par rapport à l'autre.

11. Unité d'entraînement selon l'une quelconque des revendications précédentes, **caractérisée en ce que** l'élément de transmission est une barre de traction ou de poussée, un câble Bowden ou un câble de traction.
